Europäisches Patentamt

European Patent Office

Office européen des brevets

(19)

(11) Numéro de publication: **0 160 958**

**A1**

(12) **DEMANDE DE BREVET EUROPEEN**

(21) Numéro de dépôt: 85105494.0

(22) Date de dépôt: 06.05.85

(51) Int. Cl.⁴: **A 01 K 89/00**
A 63 H 23/00, B 65 H 75/40

(30) Priorité: 11.05.84 FR 8407459

(43) Date de publication de la demande:
13.11.85 Bulletin 85/46

(84) Etats contractants désignés:
AT BE CH DE GB IT LI LU NL SE

(71) Demandeur: Boulord, René
Chemin de la Fontaine aux Noyers
F-95350 Saint Brice sous Foret(FR)

(72) Inventeur: Toussaint, Roger
21, rue A. Grunig
F-95200 Sarcelles(FR)

(54) Dispositif enrouleur-dérouleur de fil, notamment de fil à pêche.

(57) L'enrouleur-dérouleur est constitué d'un support circulaire (1) pourvu d'une gorge périphérique (2) dans laquelle se loge, à libre rotation, un élément annulaire creux (3) pourvu d'une fente étroite (4) le long de sa périphérie extérieure, le support étant pourvu d'un organe de préhension (5), l'élément annulaire étant pourvu d'un organe de manoeuvre.

FIG.1

EP 0 160 958 A1

Croydon Printing Company Ltd.

La présente invention concerne un dispositif enrouleur-dérouleur de fil, notamment d'un fil de pêche.

Le dispositif selon l'invention se compose d'un support
circulaire pourvu d'une gorge périphérique dans laquelle se
loge, à libre rotation, un élément annulaire creux de section
correspondante, pourvu d'une fente étroite le long de sa périphérie extérieure, le support étant pourvu d'un organe de préhension, l'élément annulaire étant pourvu d'un organe de manoeuvre.

Selon une forme de réalisation l'élément annulaire est
torique.

Selon une variante le support circulaire est lui même réalisé sous la forme d'un élément annulaire.

Selon une autre forme de réalisation l'organe de préhension
est réalisé sous la forme d'une barre disposée diamétralement
à l'intérieur du support circulaire annulaire.

Selon une autre forme de réalisation le support circulaire
comporte un moyen de freinage agissant sur l'élément annulaire.

La figure 1 est une vue en élévation partiellement arrachée du dispositif selon l'invention.

La figure 2 est une coupe suivant AA de la figure 1 .

La figure 3 est une vue partielle, en coupe, d'une variante
de ce dispositif.

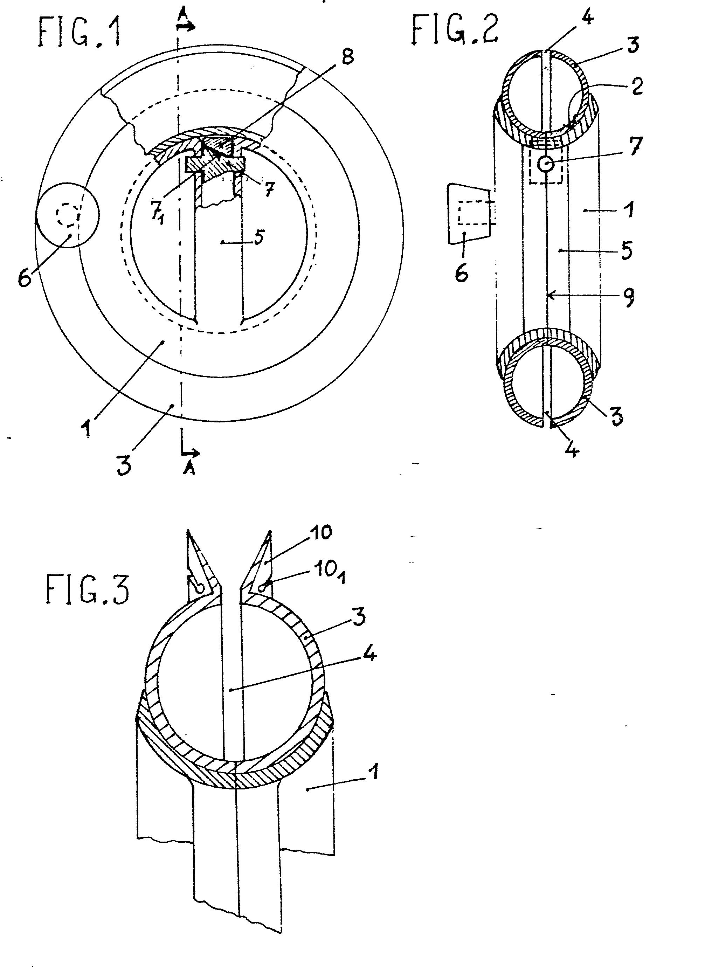

Le dispositif représenté sur les figures 1 et 2 comprend
un support annulaire (1) pourvu sur sa périphérie externe d'
une gorge (2) et d'un élément annulaire creux (3) en forme de
tore, qui est logé à libre rotation dans cette gorge ( 2).

L'élément torique (3) est pourvu d'une fente étroite (4)
le long de sa périphérie extérieure afin de permettre le passage du fil se déroulant ou s'enroulant dans la partie creuse
de l'élément torique.

La gorge (2) et l'élément torique (3) sont de forme et de
section correspondantes afin d'être en contact de glissement
par des surfaces lisses suffisament importantes pour permettre
un guidage précis de l'élément torique et sa libre rotation.

Le support annulaire (1) présente une barre diamétrale (5).

Cette barre constitue une poignée de préhension qui, du fait de sa position dans le plan médian à l'intérieur du support, permet de maintenir fermement le dispositif enrouleur-dérouleur lors de sa manipulation, sans créer de forces en porte-à-faux lorsqu'il s'exerce une traction sur le fil.

La longueur de cette barre (5) est donc suffisante pour permettre le passage de la main et la fermeture du poing sur la barre.

Lors du maintien du dispositif par la barre (5) la rotation de l'élément torique pour l'enroulement ou le déroulement du fil par la fente (4), est assurée par un bouton de manoeuvre (6) tournant sur son axe de support.

La barre de préhension (5) est réalisée creuse, au moins partiellement et est traversée de part en part, à proximité de l'une de ses extrémités, par un plot coulissant (7). A l'intérieur de la barre le plot comporte un plan incliné $(7_1)$ sur lequel est placé un élément en coin (8) susceptible de s'appliquer, à l'intérieur de la gorge (2), contre la périphérie interne de l'élément torique (3) pour freiner ou empêcher sa rotation. Ce freinage ou ce blocage est obtenu en appuyant sur l'une des extrémités du plot (7) et la libération de l'élément annulaire torique (3) est obtenue en appuyant sur son extrémité opposée .

L'élément torique (3) et son support annulaire (1) sont réalisés chacun en deux pièces identiques moulées dans une matière plastique et s'assemblant, par soudage, collage ou clipsage, suivant le plan médian de symétrie (9) du dispositif. L'axe de l'organe de manoeuvre (6) pourra être soit rapporté soit venu de moulage sur l'une des moitiés de l'élément torique (3).

ce dispositif qui constitue une bobine peut contenir une grande quantité de fil enroulé, par exemple 200 à 300 mètres pour un diamètre de l'ordre de 4 centimètres de l'élément torique (3). Il permet l'enroulement et le déroulement rapide du fil sans risque d'emmêlement, le guidage du fil étant parfaitement assuré par la fente (4) dont la largeur,par exemple 2 millimètres, est supérieure au diamètre du fil.

3

Ce dispositif s'applique notamment à l'enroulement et au déroulement d'un fil de pêche mais bien entendu il pourra s'utiliser dans tous les cas où l'on désirera mettre en oeuvre un fil, une corde ou un câble de grande longueur et par exemple pour recevoir le fil relié à un ballon aérien ou à un cerf-volant.

Dans le cas particulier d'un fil de pêche constituant une ligne de fond comportant des portions reliées à des hameçons et  fixées de manière régulièrement répartie sur ce fil, le dispositif sera de préférence réalisé de la manière représentée sur la figure (3). Dans ce cas les bords de la fente (4) comportent, à l'extérieur de l'élément torique creux (3) des lèvres légèrement évasées (10), pourvues d'encoches ou de fentes ($10_1$) dans lesquelles sont passées les portions de fil comportant les hameçons. Cette disposition permettra leur rangement au fur et à mesure de l'enroulement de la ligne sans gêner son déroulement ultérieur.

Ces lèvres sont de préférence venues de moulage avec chacune des moitiés de l'élément torique (3).

0160958

REVENDICATIONS

1) Dispositif enrouleur-dérouleur de fil notamment d'un fil de pêche, caractérisé en ce qu'il se compose d'un support annulaire (1) pourvu d'une gorge périphérique (2), dans laquelle se loge, à libre rotation, un élément annulaire creux (3) de section correspondante, pourvu d'une fente étroite (4) le long de sa périphérie extérieure, le support (1) étant pourvu d'un organe de préhension (5), l'élément annulaire étant pourvu d'un organe de manoeuvre (6).

2) Dispositif selon la revendication 1 caractérisé en ce que l'élément annulaire (3) est torique.

3) Dispositif selon la revendication 1 caractérisé en ce que le support circulaire (1) est lui même réalisé sous la forme d'un élément annulaire.

4) Dispositif selon la revendication 3 caractérisé en ce que l'organe de préhension (5) est réalisé sous la forme d'une barre disposée diamétralement à l'intérieur du support circulaire annulaire (3).

5) Dispositif selon l'une quelconque des revendications précédentes caractérisé en ce que le support circulaire (1) comporte un moyen de freinage agissant sur la périphérie de l'élément annulaire creux (3).

6) Dispositif selon la revendication 5 caractérisé en ce que le moyen de freinage est constitué par un plot mobile (7) traversant la barre (5) de part en part ,et pourvu, à l'intérieur de la barre,d'un plan incliné ($7_1$), un élément en coin (8) étant disposé sur ce plan incliné pour s'appliquer, lors du déplacement duplot, dans la gorge du support (1), contre la périphérie de l'élément annulaire (3) pour son freinage.

7) Dispositif selon l'une quelconque des revendications précédentes caractérisé en ce que l'élément annulaire (3) comporte des lèvres (10) pourvues d'encoches ($10_1$) sur les bords de la fente étroite (4).

8) Dispositif selon l'une quelconque des revendications précédentes caractérisé en ce que le support circulaire (1) et l'élément annulaire (3) sont réalisés en matière plastique.

REVENDICATION (suite )

9) Dispositif selon l'une quelconque des revendications précédentes caractérisé en ce que le support circulaire (1) et l'élément annulaire (3) sont réalisés en deux parties s'assemblant suivant le plan de symétrie diamétral du dispositif.

FIG.1

FIG.2

FIG.3

Office européen
des brevets

**RAPPORT DE RECHERCHE EUROPEENNE**

0160958

Numéro de la demande

EP 85 10 5494

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | US-A-3 169 723 (WILSON)  * En entier * | 1,3,4, 5 | A 01 K 89/00 A 63 H 23/00 B 65 H 75/40 |
| A | | 6,9 | |
| A | US-A-2 712 908 (KOZMINSKI)  * En entier * | 1,3,5, 8,9 | |
| A | US-A-3 601 330 (MINOBE)  * En entier * | 1,8,9 | |
| A | US-A-3 687 393 (WILSON) | | |
| A | CH-A- 382 102 (UEBERSAX) | | |
| A | US-A-3 838 830 (PETTIT) | | |

DOMAINES TECHNIQUES RECHERCHES (Int. Cl.4)

A 01 K
A 63 H
B 65 H

Le présent rapport de recherche a été établi pour toutes les revendications

| Lieu de la recherche | Date d'achèvement de la recherche | Examinateur |
|---|---|---|
| LA HAYE | 05-06-1985 | VERDOODT S.J.M. |